# EUROPÄISCHE PATENTSCHRIFT

(11) **EP 1 533 175 B1**
(45) Veröffentlichungstag und Bekanntmachung des Hinweises auf die Patenterteilung: **25.08.2010**
(21) Anmeldenummer: 04105530.2
(22) Anmeldetag: 04.11.2004
(51) Int. Cl.: B60N 2/16, B60N 2/54

(54) **Vorrichtung zum Anzeigen einer Höhenstellung und/oder Gewichtsbelastung eines Fahrzeugsitzes**
Device for displaying a height position and /or a load of a vehicle seat
Dispositif pour l'affichage d'une position en hauteur et/ou d'une charge d'un siège de véhicule

(30) Priorität: 22.11.2003 DE 10354693
(43) Veröffentlichungstag der Anmeldung: 25.05.2005
(73) Patentinhaber: GRAMMER AG, 92224 Amberg (DE)
(72) Erfinder: Raum, Holger, 92237, Sulzbach-Rosenberg (DE)
(74) Vertreter: Hannke, Christian

(56) Entgegenhaltungen:
- EP-A- 1 266 793
- DE-C1- 10 038 979

## Beschreibung

Die Erfindung betrifft eine Vorrichtung zum Anzeigen einer Höhenstellung und/oder Gewichtsbelastung eines Fahrzeugsitzes, welcher eine Sitzplatte, eine Grundeinrichtung und eine dazwischen angeordnete Federeinrichtung umfasst, mit mindestens einem Zeigerelement, welches einem mit der Sitzplatte verbundenen Skalenelement zugeordnet ist, gemäß dem Oberbegriff des Patentanspruches 1.

Derartige Anzeigevorrichtungen sind aus der DE 100 38 979 C1 bekannt. Eine solche Anzeigevorrichtung weist eine Schenkelfeder auf, die mit ihrem einen Endabschnitt an einer Sitzplatte eines Fahrzeugsitzes und die mit ihrem zweiten Endabschnitt an einer Grundplatte angebracht ist, wobei mit dem ersten Endabschnitt der Schenkelfeder ein einer Skala zugeordneter Zeiger verbunden ist. Hierbei sind sowohl der Zeiger als auch die Skala innerhalb eines mit der Sitzplatte verbundenen gemeinsamen Basisteiles angeordnet.

Bei der verwendeten Schenkelfeder handelt es sich um eine einfache Schenkelfeder mit zwei Federschenkeln, die miteinander einen spitzen oder einen stumpfen Winkel einschließen. Die Schenkelfeder weist zwischen den Federschenkeln wenigstens eine Federwindung auf. Eine derartige Schenkelfeder ist mit ihrem ersten Ende an der Sitzplatte und mit ihrem zweiten Ende an der Grundeinrichtung, die eine mit der Fahrzeugkarosserie verbundene Grundplatte darstellen kann, angebracht. Von dem ersten oberen Ende der Schenkelfeder steht der Zeiger starr nach oben weg, wobei dieser mit einem ersten oberen Federschenkel der Schenkelfeder einen definierten Winkel einschließt.

Wird die Sitzplatte des Fahrzeugsitzes durch einen Sitzbenutzer gewichtsbelastet, so ergibt sich eine Bewegung der Sitzplatte nach unten. Dabei führt die Schenkelfeder mit ihren Federschenkeln eine Schwenkbewegung nach unten aus, die eine Auslenkung des starr damit verbundenen Zeigers bewirkt. Aufgrund der Schwenkbewegung der Schenkelfeder, die ebenso ein horizontales Verschieben der Federwindung bewirkt, ist eine Einstellung eines Anzeigetoleranzbereiches des Zeigers aufwendig, da der starr mit dem Federschenkel verbundene Zeiger ebenso sowohl eine Schwenkbewegung als auch eine Verschiebebewegung in im Wesentlichen horizontaler Richtung erfährt.

Die Herstellung derartiger Schenkelfedern aus Stahl erfordert ein genau arbeitendes Herstellungsverfahren, um bei der Herstellung einer Vielzahl von Schenkelfedern keine Abweichungen in ihrer Federkraft auftreten zu lassen und für jede Schenkelfeder eine gleich bleibende Federkraft selbst bei deren langjähriger Benutzung sicherzustellen.

Zudem ist die Haltbarkeit von Schenkelfedern, die aus Stahl gefertigt sind, aufgrund ihrer Rostanfälligkeit begrenzt.

Aufgrund der in derartigen Schenkelfedern verwendeten Federwindungen ist es notwendig, für die Anordnung der Schenkelfeder einen Einbauraum zur Verfügung zu stellen, dessen Abmaß mindestens dem Durchmesser einer Federwindung entspricht, da die Federwindung selbst bei zusammengedrücktem Zustand der Schenkelfeder weiterhin ihre Abmaße beibehält.

Die starre Anordnung des Zeigers an der Schenkelfeder erfordert zudem eine definierte Längenabmessung der Schenkelfeder in Abhängigkeit von dem variierenden Abstand zwischen der Grundplatte und der Sitzplatte, da ansonsten eine funktionsrichtige Ausrichtung des Zeigers zu der Skala nicht sichergestellt ist.

Demzufolge liegt der vorliegenden Erfindung die Aufgabe zugrunde, eine Vorrichtung zum Anzeigen einer Höhenstellung und/oder Gewichtsbelastung eines Fahrzeugsitzes der eingangs genannten Art zur Verfügung zu stellen, deren Herstellung kostengünstig ist, die eine einfache Toleranzeinstellung und eine raumsparende Anordnung unter Verzicht auf Federwindungen an einem Fahrzeugsitz ermöglicht und deren Einbau für verschiedene Fahrzeugsitztypen, die sich in ihrem Abstand zwischen einer Grundeinrichtung und einer Sitzplatte des Fahrzeugsitzes unterscheiden, möglich ist.

Diese Aufgabe wird gemäß den Merkmalen des Patentanspruches 1 gelöst.

Ein wesentlicher Punkt der Erfindung liegt darin, dass bei einer Vorrichtung zum Anzeigen einer Höhenstellung und/oder Gewichtsbelastung eines Fahrzeugsitzes, welcher eine Sitzplatte, eine Grundeinrichtung und eine dazwischen angeordnete Federeinrichtung umfasst, ein einstückiges, stabförmiges Kunststoffelement zwischen einem Zeigerelement, weiches einem mit der Sitzplatte verbundenen Skalenelement zugeordnet ist, und der Grundeinrichtung anzuordnen, in dessen Längsverlauf mindestens ein elastisch-flexiblen Bereich angeordnet ist. Ein derartiges einstückiges Kunststoffelement kann beispielsweise aus zwei, vorzugsweise gleichlangen, in sich steifen Anteilen und dem dazwischen angeordneten flexiblen Bereich aus einem Stück gefertigt bestehen. Hierfür ist der flexible Bereich als flacher elastischer Abschnitt durch beispielsweise einfaches Zusammenpressen eines stabförmigen Kunststoffteiles während dessen Herstellungsvorganges ausbildbar. Auf diese Weise kann eine Schwenkbewegung der Anteile zueinander in einer vordefinierten von den Anteilen aufgespannten Ebene durchgeführt werden. Die Verwendung eines derartig einstückigen Kunststoffelementes ermöglicht somit nicht nur eine kostengünstige und schnelle Herstellung der Anzeigevorrichtung, sondern auch eine raumsparende Anordnung derjenigen, da sich durch die Anordnung des flexiblen Kunststoffbereiches eine Federwindung erübrigt.

Die Haltbarkeit eines derartigen Kunststoffelementes ist im Vergleich zu den bisher verwendeten Schenkelfedern aus Stahl hoch, da die hierfür verwendeten Kunststoffe korrosionsbeständig sind.

Ein erstes oberes mit dem Zeigerelement verbundenes Ende des Kunststoffelementes weist einen Abschnitt auf, der an der Sitzplatte um eine senkrecht zu der Ebene, die durch die Anteile des Kunststoffelementes aufgespannt wird, ausgerichtete Achse schwenkbar gelagert ist. Hierdurch kann das äußerste Endstück des oberen ersten Endes vorteilhaft in eine unterseitige Ausnehmung des Zeigerelementes eingreifen und das schwenkbar gelagerte Zeigerelement durch dessen Schwenkbewegung ebenso verschwenken, ohne dass eine starre Verbindung zwischen Zeigerelement und dem Kunststoffelement erforderlich ist. Dies ermöglicht eine einfache Toleranzeinstellung der Anzeigevorrichtung bezüglich der Ausrichtung des Zeigerelementes gegenüber dem Skalenelement.

Ein zweites unteres Ende des Kunststoffelementes ist derart hakenförmig ausgebildet, dass ein Endstück des zweiten Endes senkrecht verlaufend zu dem unteren Anteil des Kunststoffelementes angeordnet ist. Um diese hakenförmige Ausbildung in eine aus Blechmaterial geformte Lasche, welche an der Grundeinrichtung angebracht ist, seitlich einzustecken, wirkt sich wiederum vorteilhaft die flexible Ausbildung des flachen elastischen Abschnittes aus, die eine Verwindung des Kunststoffelementes bezüglich seiner Längsachse zulässt.

Ein das Kunststoffelement herstellendes Kunststoff-Spritzwerkzeug kann mittels unterschiedlich ausgebildeter Einsätze verschiedene Gestängeformen des Kunststoffelementes herstellen. Das heißt, es wird lediglich ein gemeinsames Werkzeug für das Spritzen verschiedenst geformter Kunststoffelemente verwendet.

Vorteilhaft kann bereits während des Spritzherstellungsvorganges aufgrund der Verwendung von Kunststoffmaterial eine Beschriftung und/oder eine Einfärbung an dem Kunststoffelement auf einfache Weise durchgeführt werden, um eine eindeutige Kennzeichnung verschiedener Kunststoffelementvarianten zur Reduzierung der Verwechslungsgefahr bei ihrer Montage zu erreichen. Eine der möglichen Varianten des Kunststoffelementes liegt darin, dass die steifen Anteile als biegestarre, stabförmige Arme in sich stufenförmig aufgebaut sind, um sie den Bauraumerfordernissen anzupassen.

Gemäß einer bevorzugten Ausführungsform ist das Zeigerelement in einer senkrecht zu der von den Anteilen des Kunststoffelementes aufgespannten Ebene ausgerichteten weiteren Ebene verschwenkbar, so dass die Auf- und Abwärtsbewegung der Kunststoffelementanteile in eine im Wesentlichen horizontal ausgerichtete Schwenkbewegung umgewandelt wird. Diese weitere Ebene ist im Wesentlichen parallel zu der Ebene der Sitzplatte. Auf diese Weise ist ein einfaches Ablesen der momentanen Zeigerstellung innerhalb des Skalenelementes durch den Benutzer des Fahrzeugsitzes insbesondere dann möglich, wenn das Basisteil mit den darin angeordneten Zeiger- und Skalenelementen neben oder vor einer Sitzfläche der Sitzplatte angeordnet ist.

Das Endstück des oberen ersten Endes, welches in die Ausnehmung des Zeigerelementes eingreift, wird mittels Mitnehmerelemente, die an der Ausnehmung hervorstehend angebracht sind, zuverlässig mit dem Zeigerelement verbunden. Die Mitnehmerelemente stellen ein Mitnehmen des Zeigerelementes für die Durchführung seiner Schwenkbewegung bei einem Verschwenken des Endstückes des ersten Endes um die Achse, an der der Abschnitt des Endes schwenkbar gelagert ist, sicher. Da diese Achse ortsfest mit dem Basisteil, welches wiederum mit der Sitzplatte verbunden ist, verbunden ist, kann ein ungewolltes Verschieben oder verschwenken des Zeigers aufgrund einer falschen Längenabmessung der Anteile des Kunststoffelementes vermieden werden. Dies hat zur Folge, dass das Kunststoffelement bei verschiedenen Fahrzeugsitztypen verwenden werden kann, die sich in ihrem Abstand zwischen der als Grundplatte ausgebildeten Grundeinrichtung und der Sitzplatte bei einer Höhennormalstellung unterscheiden.

Weitere bevorzugte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: eine Seitenansicht eines Fahrzeugsitzes in einer schematischen Darstellung;
- Fig. 2: eine perspektivische Darstellung der erfindungsgemäßen Anzeigevorrichtung gemäß einer Ausführungsform der Erfindung in einer Ansicht von schräg oben, und
- Fig. 3: eine perspektivische Darstellung der erfindungsgemäßen Vorrichtung gemäß der in Fig. 2 gezeigten Ausführungsform der Erfindung in einer Ansicht von schräg unten.

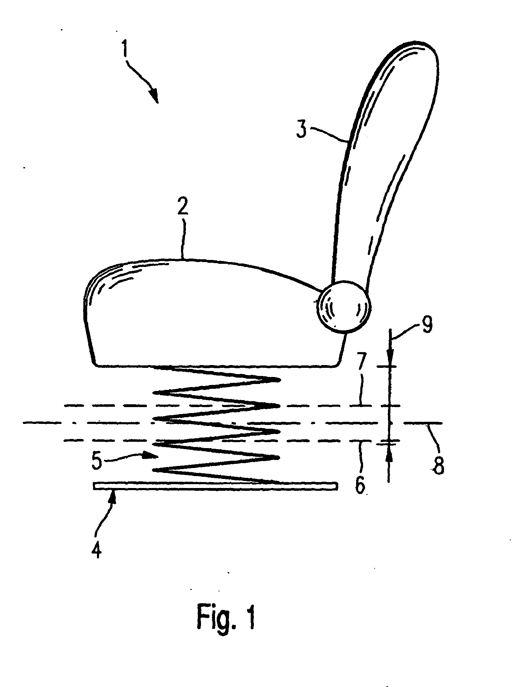

Fig. 1 zeigt in einer schematischen Seitenansicht einen Fahrzeugsitz 1, der eine Sitzplatte 2 und eine von der Sitzplatte 2 nach oben stehende Rückenlehne 3 aufweist. Der Fahrzeugsitz 1 weist außerdem eine als Grundplatte ausgebildete Grundeinrichtung 4 auf, mit der er direkt oder indirekt an der Fahrzeugkarosserie befestigt wird. Zwischen der Grundplatte 4 und der Sitzplatte 2 ist eine Federeinrichtung 5 vorgesehen, die eine Höheneinstellung und/oder eine Gewichtseinstellung des Fahrzeugsitzes 1 beziehungsweise seiner Sitzplatte 2 im Bezug auf die Grundplatte 4 ermöglicht.

Die dünne Strich-Linie 6 verdeutlicht die Höhenstellung des Sitzes 1, wenn auf diesem ein Sitzbenutzer mit dem Gewicht G1 Platz nimmt; die dünne Strich-Linie 7 verdeutlicht die Höhenstellung des Fahrzeugsitzes 1, wenn auf ihm ein Sitzbenutzer mit dem Gewicht G2 < G1 Platz nimmt. Die Strich-Punkt-Linie 8 zwischen den Strich-Linien 6 und 7 hingegen verdeutlicht die Mittellage für jedes beliebige Gewicht G. Eine senkrechte Doppelpfeil-Linie 9 zeigt den Federweg der Sitzplatte 2 in Bezug auf die Grundplatte 4 des Fahrzeugsitzes 1.

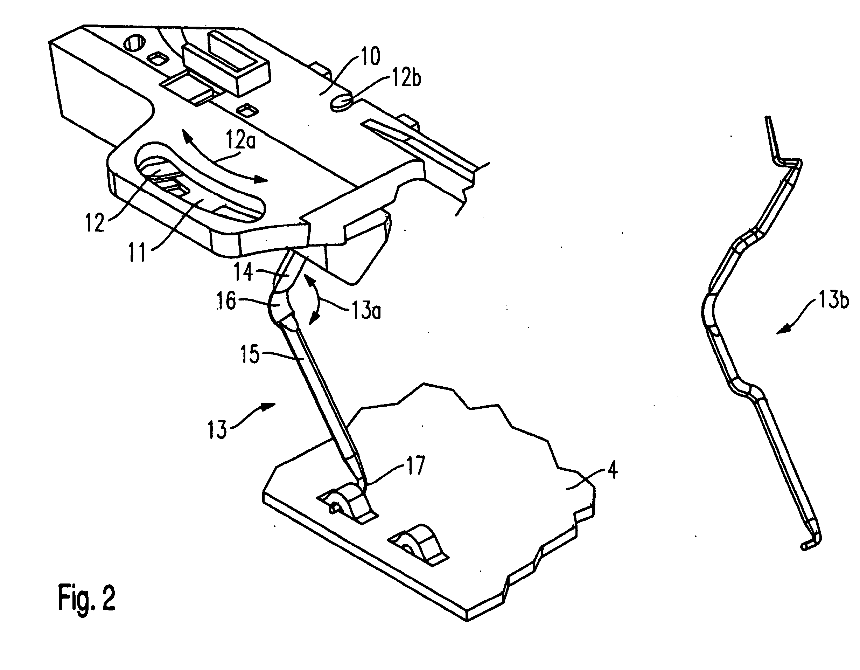

In Fig. 2 wird in einer perspektivischen Darstellung mit einer Ansicht von schräg oben eine Vorrichtung zur Anzeige der Höhenstellung und/oder Gewichtsbelastung des Fahrzeugsitzes gemäß einer Ausführungsform der Erfindung gezeigt. Die Anzeigevorrichtung weist ein Basisteil 10 auf, in welchem eine Skala 11 und ein Zeiger 12 integriert sind. Der Zeiger 12 kann gegenüber der Skala 11 eine Schwenkbewegung 12a durch dessen Verschwenkung um eine Achse 12b durchführen.

Ein einstückiges stabförmiges Kunststoffelement 13 weist zwei gleichlange Anteile 14 und 15 auf, die durch einen flexiblen Bereich 16 voneinander beabstandet sind. Der flexible Bereich 16 ist während der Herstellung des Kunststoffelementes 13 flach und elastisch derart ausgebildet worden, dass ein zueinander Verschwenken der Anteile 14 und 15 im Wesentlichen nur in der durch diese Anteile aufgespannten Ebene möglich ist.

Der erste Anteil 14 endet mit einem hier nicht gezeigten ersten oberen Ende an dem Basisteil 10. Der zweite Anteil 15 endet mit einem zweiten Ende 17 an der Grundplatte 4, in welcher das Ende 17 schwenkbar gelagert ist.

Wird die Sitzplatte 2, die mit dem Basiselement 10 verbunden ist, durch einen Sitzbenutzer gewichtbelastet, so ergibt sich eine nach unten gerichtete Bewegung der Sitzplatte 2. Hierbei führt das einstückige Kunststoffelement 13 eine Schwenkbewegung nach unten aus, die durch einen Pfeil 13a angedeutet ist. Gleichzeitig wird der zweite Anteil 15 um eine am zweiten Ende 17 angeordnete Schwenkachse nach unten geschwenkt.

Zudem wird gleichzeitig mit der Verschwenkung der beiden Anteile 14 und 15 des Kunststoffelementes der mit dem ersten oberen Ende des Anteiles 14 verbundene Zeiger 12 ausgelenkt, wie es durch den Doppelpfeil 12a angedeutet ist. Durch Einstellung der Federhärte der Federeinrichtung 5 ist es in an sich bekannter Weise möglich, die Sitzplatte 2 wieder in ihre Mittellage 8 zurückzustellen, in welcher der Zeiger 12 einer Mittelposition innerhalb der Skala 11 zugeordnet ist.

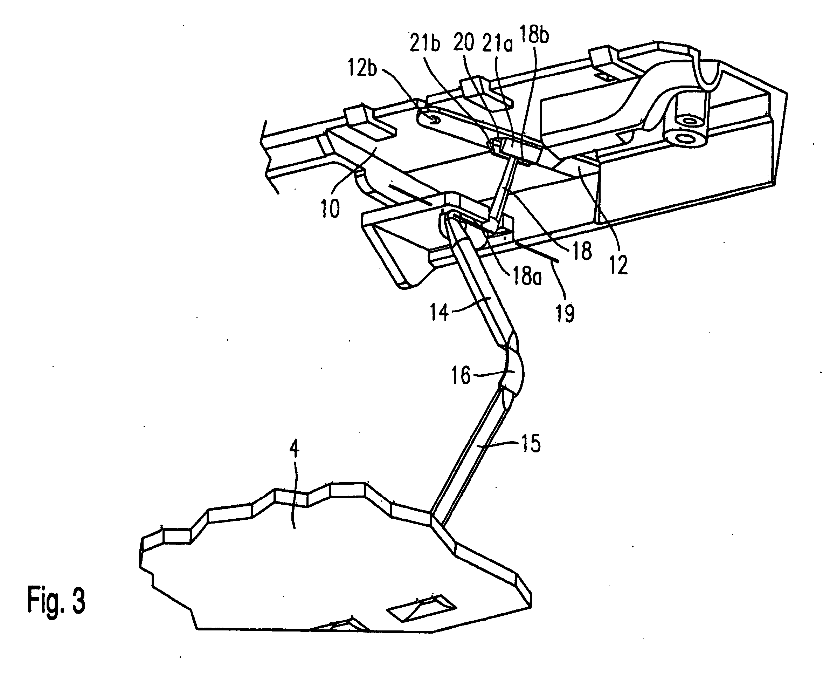

In Fig. 3 wird in einer perspektivischen Darstellung die Anzeigevorrichtung gemäß der in Fig. 2 gezeigten Ausführungsform der Erfindung mit einer Ansicht von schräg unten gezeigt. Dieser Darstellung ist deutlich zu entnehmen, dass das erste obere Ende 18 mit einem Abschnitt 18a schwenkbar um eine horizontal ausgerichtete Achse 19 an dem Basisteil 10 gelagert ist. Die Ausrichtung der Achse 19 ist senkrecht zu derjenigen Ebene, die durch die verschwenkbaren Abschnitte 14 und 15 des Kunststoffelementes 13 aufgespannt wird.

Von dem Abschnitt 18a zu dem ebenso horizontal ausgerichteten Zeiger 12 erstreckt sich ein weiterer Teil des ersten oberen Endes 18 des Kunststoffelementes 13, dessen Endstück 18b in einer Ausnehmung 20 des Zeigers 12 unterseitig eingreift. Zusätzlich angebrachte hervorstehende Mitnehmerelemente 21a und 21b dienen dazu, ein zuverlässiges Mitnehmen des Zeigers 12 während einer Schwenkbewegung des Endstückes 18b sicherzustellen. Die Schwenkbewegung des Endstückes 18b wird dadurch initiiert, dass das Basisteil 10 zusammen mit der Sitzplatte 2 nach unten bewegt wird, hierdurch die Anteile 14 und 15 des Kunststoffelementes 13 zueinander verschwenkt werden und dadurch eine Drehung des Abschnittes 18a innerhalb der Schwenklagerung des Basisteils 10 stattfindet.

### Bezugszeichenliste

- 1: Fahrzeugsitz
- 2: Sitzplatte
- 3: Rückenlehne
- 4: Grundplatte
- 5: Federeinrichtung
- 6, 7: dünne Strich-Linie
- 8: Strich-Punkt-Linie
- 9: Doppelpfeil-Linie (Federweg)
- 10: Basisteil
- 11: Skala
- 12: Zeiger
- 12a: Schwenkbewegung des Zeigers
- 12b: Schwenklagerung des Zeigers
- 13: Kunststoffelement
- 13a: Schwenkbewegung des Kunststoffelementes
- 13b: weitere mögliche Ausführungsform des erfindungsgemäßen Kunststoffelementes
- 14: erster Anteil des Kunststoffelementes
- 15: zweiter Anteil des Kunststoffelementes
- 16: flexibler Bereich des Kunststoffelementes
- 17: zweites unteres Ende des Kunststoffelementes
- 18: erstes oberes Ende des Kunststoffelementes
- 18a: Abschnitt des ersten oberen Endes
- 18b: Endstück des ersten oberen Endes
- 19: Schwenkachse
- 20: Ausnehmung
- 21a, 21b: Mitnehmerelemente

## Patentansprüche

1. Vorrichtung zum Anzeigen einer Höhenstellung und/oder Gewichtsbelastung eines Fahrzeugsitzes (1), welcher eine Sitzplatte (2), eine Grundeinrichtung (4) und eine dazwischen angeordnete Federeinrichtung (5) umfasst, mit mindestens einem Zeigerelement (12), welches einem mit der Sitzplatte (2) verbundenen Skalenelement (11) zugeordnet ist,
wobei das Zeigerelement (12) mit einem ersten oberen Ende (18) eines einstückigen, stabförmigen Elementes (13), in dessen Längsverlauf mindestens ein flexibler Bereich (16) angeordnet ist, verbunden ist und dessen zweites Ende (17) an der Grundeinrichtung (4) schwenkbar angeordnet ist,
wobei der flexible Bereich (16) das stabförmige Element (13) in zwei, vorzugsweise gleichlange Anteile (14, 15) aufteilt,
wobei der flexible Bereich (16) als flacher elastischer Abschnitt derart ausgebildet ist, dass eine Schwenkbewegung der Anteile (14, 15) zueinander in einer von den Anteilen (14, 15) aufgespannten Ebene durchführbar ist, wobei ein Abschnitt (18a) des ersten oberen Endes (18) des Elementes (13) an der Sitzplatte (2) um eine senkrecht zu der Ebene ausgerichtete Achse (19) schwenkbar gelagert ist,
**dadurch gekennzeichnet, dass**
das stabförmige Element (13) aus Kunststoff ausgerührt ist und sich von dem Abschnitt (18a) ein weiterer Teil (18b) des Elementes (13) erstreckt, dessen Endstück in eine Ausnehmung (20) des Zeigerelementes (12) eingreift.

2. Vorrichtung nach Anspruch 1,
**dadurch gekennzeichnet, dass**
das Zeigerelement (12) zu der von den Anteilen (14, 15) aufgespannten Ebene mindestens annähernd senkrecht orientiert ist.

3. Vorrichtung nach Anspruch 2,
**dadurch gekennzeichnet, dass**
das Zeigerelement (12) in einer senkrecht zu der von den Anteilen (14, 15) aufgespannten Ebene ausgerichteten weiteren Ebene verschwenkbar (12a) ist.

4. Vorrichtung nach Anspruch 3,
**dadurch gekennzeichnet, dass**
die weitere Ebene parallel zur Sitzplattenebene verläuft.

5. Vorrichtung nach einem der vorangegangenen Ansprüche,
**dadurch gekennzeichnet, dass**
das Zeigerelement (12) mit dem ersten oberen Ende (18) des Kunststoffelementes (13) mittels einer unterseitigen Ausnehmung (20) des Zeigerelementes (12) verbunden ist.

6. Vorrichtung nach Anspruch 5,
**dadurch gekennzeichnet, dass**
an der unterseitigen Ausnehmung (20) hervorstehende Mitnehmerelemente (21a, 21 b) zum Mitnehmen des Zeigerelementes (12) für die Durchführung einer Schwenkbewegung (12a) angeordnet sind.

7. Vorrichtung nach einem der vorangegangenen Ansprüche,
**dadurch gekennzeichnet, dass**
das Skalenelement (11) und das Zeigerelement (12) an einem der Sitzplatte (2) zugeordnetem gemeinsamen Basisteil (10) angeordnet sind.

## Claims

1. A device for displaying a height position and/or a load of a vehicle seat (1), which comprises a seat plate (2), a base device (4) and a spring device (5) arranged therebetween, with at least one pointer element (12) which is associated with a scale element (11) connected to the seat plate (2),
wherein the pointer element (12) is connected to a first upper end (18) of a one-piece rod-shaped element (13), in the longitudinal extension of which at least one flexible region (16) is arranged, and the second end (17) thereof is arranged so as to be pivotable on the base device (4),
wherein the flexible region (16) divides the rod-shaped element (13) into two portions (14, 15) preferably of equal length,
wherein the flexible region (16) is designed in the form of a flat resilient portion in such a way that a pivoting movement of the portions (14, 15) with respect to each other can be carried out in a plane formed by the portions (14, 15), wherein a portion (18a) of the first upper end (18) of the element (13) is mounted on the seat plate (2) to be pivotable about an axis (19) orientated at a right angle to the plane, **characterised in that** the rod-shaped element (13) is produced from plastics material, and a further part (18b) of the element (13) extends from the portion (18a), the end piece of which engages in a recess (20) in the pointer element (12).

2. A device according to claim 1, **characterised in that** the pointer element (12) is orientated at least approximately at a right angle to the plane formed by the portions (14, 15).

3. A device according to claim 2, **characterised in that** the pointer element (12) is pivotable (12a) in a further plane orientated at a right angle to the plane formed by the portions (14, 15).

4. A device according to claim 3, **characterised in that** the further plane extends parallel to the plane of the seat plate.

5. A device according to any one of the preceding claims, **characterised in that** the pointer element (12) is connected to the first upper end (18) of the plastics material element (13) by means of a recess (20) on the underside of the pointer element (12).

6. A device according to claim 5, **characterised in that** entrainment elements (21a, 21b) projecting on the recess (20) on the underside are provided for the entrainment of the pointer element (12) in order to perform a pivoting movement (12a).

7. A device according to any one of the preceding claims, **characterised in that** the scale element (11) and the pointer element (12) are arranged on a common base part (10) associated with the seat plate (2).

## Revendications

1. Dispositif pour afficher une position en hauteur et/ou une charge en poids d'un siège de véhicule (1), qui comprend une assise de siège (2), un élément de base (4) et un dispositif à ressort (5) agencé entre eux, comprenant au moins un élément indicateur (12), qui est affecté à un élément gradué (11) raccordé à l'assise de siège (2),
dans lequel l'élément indicateur (12) est raccordé à une première extrémité supérieure (18) d'un élément d'un seul tenant (13) en forme de barre, dans la longueur duquel est aménagée au moins une zone flexible (16), et dont la seconde extrémité (17) est agencée à pivotement sur l'élément de base (4), la zone flexible (16) séparant l'élément (13) en forme de barre en deux portions (14, 15) de préférence de même longueur,
dans lequel la zone flexible (16) se présente sous la forme d'une section élastique plate de manière à permettre un mouvement pivotant des portions (14, 15) l'une vers l'autre dans un plan défini par les portions (14, 15), une section (18a) de la première extrémité supérieure (18) de l'élément (13) étant montée à pivotement sur l'assise de siège (2) autour d'un axe (19) orienté perpendiculairement audit plan,
**caractérisé en ce que**
l'élément (13) en forme de barre est réalisé dans un matériau synthétique et **en ce que** une autre partie (18b) de l'élément (13) s'étend à partir de la section (18a), la partie d'extrémité de l'autre partie (18b) s'engageant dans un évidement (20) de l'élément indicateur (12).

2. Dispositif selon la revendication 1,
**caractérisé en ce que**
l'élément indicateur (12) est orienté au moins à peu près perpendiculairement au plan défini par les portions (14, 15).

3. Dispositif selon la revendication 2,
**caractérisé en ce que**
l'élément indicateur (12) est apte à pivoter (12a) dans un autre plan orienté perpendiculairement au plan défini par les portions (14, 15).

4. Dispositif selon la revendication 3,
**caractérisé en ce que**
l'autre plan s'étend parallèlement au plan de l'assise de siège.

5. Dispositif selon l'une quelconque des revendications précédentes, **caractérisé en ce que**
l'élément indicateur (12) est raccordé à la première extrémité supérieure (18) de l'élément (13) en matériau synthétique au moyen d'un évidement inférieur (20) de l'élément indicateur (12).

6. Dispositif selon la revendication 5,
**caractérisé en ce que**
des éléments d'entraînement (21a, 21b) faisant saillie de l'évidement inférieur (20) sont aménagés pour entraîner l'élément indicateur (12) afin d'assurer un mouvement pivotant (12a).

7. Dispositif selon l'une quelconque des revendications précédentes,
**caractérisé en ce que**
l'élément gradué (11) et l'élément indicateur (12) sont aménagés sur une partie de base (10) commune affectée à l'assise de siège (2).
